# EUROPÄISCHE PATENTSCHRIFT

(11) **EP 1 508 738 B1**
(45) Veröffentlichungstag und Bekanntmachung des Hinweises auf die Patenterteilung: **04.07.2012**
(21) Anmeldenummer: 04019463.1
(22) Anmeldetag: 17.08.2004
(51) Int. Cl.: F16L 41/08

(54) **System zum Anschluss eines Zuleitungsrohres an ein einen grösseren Durchmesser aufweisendes Hauptrohr**
System for connecting a pipe to a main pipe having a larger diameter
Système pour le raccordement d'un tuyau d'alimentation à un tuyau principale ayant un diamètre plus grand

(30) Priorität: 22.08.2003 DE 20312955 U
(43) Veröffentlichungstag der Anmeldung: 23.02.2005
(73) Patentinhaber: DS Dichtungstechnik GmbH, 48301 Nottuln (DE)
(72) Erfinder:
(74) Vertreter: Grünecker, Kinkeldey, Stockmair & Schwanhäusser

(56) Entgegenhaltungen:
- EP-A- 0 786 618
- DE-C- 306 660
- US-A- 1 940 579
- US-A- 2 173 792
- US-A- 2 445 963

## Beschreibung

Die vorliegende Erfindung betrifft ein System zum Anschluß eines Zuleitungsrohres an ein einen größeren Durchmesser aufweisendes Hauptrohr gemäß dem Oberbegriff von Anspruch 1. Ein derartiges system ist aus der WO 97/36/28.

Der Anschluß eines Zuleitungsrohres an ein Hauptrohr, insbesondere an ein Hauptrohr aus Beton, erfordert ein gesondertes Anschlußelement, dessen eine Bohrung in der Wandung des Hauptrohrs dichtend einsteckbar ist, und in welches dann das Zuleitungsrohr eingeschoben werden kann.

Anschlußelemente sind vielfältig aus dem Stand der Technik bekannt. So offenbart DE-A-37 19 552 ein Anschlußelement mit einem in eine Bohrung im Hauptrohr einzuführendes Steckteil, das auf seiner Außenfläche mit einer umlaufenden Dichtmanschette aus einem gummielastischen Werkstoff versehen ist, und mit einem daran anschließenden Muffenteil, an dessen Innenwandung ein Dichtungsring angeordnet ist, in das ein Ende des Zuleitungsrohres einschiebbar ist. Ein solches Anschlußelement erlaubt das sichere, flüssigkeitsdichte Verbinden eines Zuleitungsrohres mit einem Hauptrohr. Das Anschlußelement besteht zweckmäßigerweise aus einem festen Kunststoff, vorzugsweise PVC, Polypropylen, Polyethylen oder faserverstärkten Kunststoffen. Zur Montage wird an der Zuleitungsstelle in das Hauptrohr, beispielsweise ein Abwasserkanal aus Beton, eine Bohrung zur Aufnahme des Verbindungselementes angebracht, beispielsweise mittels einer Diamantbohrkrone. Das Einsteckteil des Anschlußelements wird in die Bohrung gesteckt, wobei die auf dem Außenumfang des Einsteckteils angeordnete Dichtmanschette im ganzen Bereich der Bohrlochwandung abdichtend wirkt. Durch die Verwendung eines gummielastischen Werkstoffes für die Dichtmanschette werden Unebenheiten in der Bohrlochwandung ausgeglichen und dadurch die Dichtwirkung erhöht. Anschließend wird das Zuleitungsrohr in das Muffenteil des Anschlußelements gesteckt. Durch den Dichtungsring im Muffenteil wird auch an dieser Stelle das Ein- und Ausdringen von Flüssigkeiten zwischen dem Zuleitungsrohr und dem Muffenteil verhindert.

EP 0 786 618 B1 offenbart nun eine Weiterbildung der DE-A-37 19 552, wobei ein auf das Einsteckteil aufschiebbarer und an einer Anschlagschulter anlegbarer Abstandring vorgesehen ist.Hierdurch ist es möglich, dass die zu fertigende Länge des Einsteckteils die maximal notwendige Länge aufweist, um die Bohrung aller Hauptrohre flüssigkeitsdicht abzuschließen. Das Hereinragen des Einsteckteils in den Innenraum von Hauptrohren mit entweder geringerem Innendurchmesser und/oder geringeren Wanddicken ist durch einen Abstandring vermeidbar. Dieser Abstandring ist auf das Einsteckteil aufschiebbar und liegt an einer Anschlagschulter sowie dem Außenumfang des Hauptrohres an.

US 2,445,963 offenbart die Verbindung von zwei Rohren unterschiedlichen Durchmessers mit Hilfe eines Dichtungsmessers, wobei durch Einfließenlassen einer Schwefel-Silikat-Verbindung im erwärmten Zustand in einen gebildeten Freiraum zwischen dem Dichtelement und der Innenwandung eines Rohres ein zusätzlicher Verbindungskörper gebildet wird, welcher in Ausnehmungen, die auf der Innenwandung des Rohres mit dem größeren Durchmesser angeordnet sind, eingreift.

US 2,173,792 offenbart ebenfalls eine Verbindung von Rohren zur Erzeugung einer wasserbeständigen Dichtung, wobei hier Graphit oder ähnliche Substanzen nach Zusammenbau des Rohranschlusses in einen gebildeten Freiraum einfließen gelassen werden

Nachteilig an den aus dem Stand der Technik bekannten Anschlusselementen ist jedoch, dass insbesondere bei starken Druckbelastungen, wie diese beispielsweise bei einer Wasserdruckprüfung im Rohrinneren, oder aber bei Kippbeanspruchungen des Anschlusselements durch Scherlasten auftreten, doch Undichtigkeiten auftreten können.

Aufgabe der vorliegenden Erfindung ist es daher, ein System zur Verfügung zu stellen, durch welches Undichtigkeiten bei dem Anschluss eines Zuleitungsrohres an ein einen größeren Durchmesser aufweisendes Hauptrohr sicher vermieden werden.

Zur Lösung dieser Aufgabe schlägt die vorliegende Erfindung ein derartiges System vor, umfassend ein Anschlusselement, welches wiederum umfasst ein in eine Bohrung eines Hauptrohrs einzuführendes Einsteckteil mit einer auf seinem Außenumfang angeordneten Dichtmanschette, wobei diese Dichtmanschette auf ihrem dem Hauptrohr zugewandten Außenfläche im Längsschnitt mindestens eine Aufnehmung aufweist, weiterhin umfassend auf der der Dichtmanschette zugewandten Seite der Bohrung des Hauptrohres mindestens eine Halterippe, welche in die Ausnehmung der Dichtmanschette eingreift, wobei die Halterippe aus einem Reaktivharz gebildet ist, umfassend Füllstoffe und Lösemittel. Durch das erfindungsgemäße System ist vorteilhafterweise sichergestellt, dass insbesondere auch bei Wasserdruckprüfungen im Rohrinneren nicht das Anschlusselement aus der Bohrung des Hauptrohres herausgedrückt wird, oder dass bei insbesondere auf das Zuleitungsrohr wirkende Scherkräften es zu Undichtigkeiten an der Anschlussstelle zwischen dem Zuleitungsrohr und dem Hauptrohr kommt. Vorteilhafterweise sind die Halterippen umlaufend auf der der Dichtmanschette zugewandten Seite der Bohrung des Hauptrohrs angeordnet. Die Anzahl der Halterippen entspricht vorteilhafterweise derjenigen der Ausnehmungen in der Dichtmanschette. Mit dem erfindungsgemäßen System ist es nicht notwendig, bei Wasserdruckprüfungen zusätzliche Stutzensicherungen anzubringen.

Bevorzugt ist die Halterippe an die Ausnehmung der Dichtmanschette angeformt. Da die dichtmanschette bevorzugt aus einem gummielastischen Werkstoff hergestellt ist, ändert sich die Form der Ausnehmung beim Einschieben des Einsteckteils des Anschlusselements in die Bohrung eines Hauptrohres, da durch die hierbei auftretenden Kräfte eine Anpassung der einzelnen Dichtungsprofile der Dichtmanschette an die Bohrungswand erfolgt. Durch die Anformung der Halterippen an die Form der Ausnehmung der Dichtmanschette, insbesondere an die nach einschieben des Einsteckteiles in die Bohrung des Hauptrohres vorliegende, ist eine optimale Dicht- und Haltewirkung des Anschlusselements sichergestellt. Die Halterippen greifen vorzugsweise ausfüllend in die sich nach dem Einschieben des Einsteckteils in die Bohrung des Hauptrohres vorhandenen Ausnehmungen der Dichtmanschette ein.

Die auf dem Außenumfang des Einsteckteils angeordnete Dichtmanschette ist bevorzugt im Längsschnitt wellenförmig, dreieckig und/oder sägezahnartig geformt (jeweils bezogen auf einen nicht eingebauten Zustand). Vorteilhafterweise werden hierbei drei bis fünfzehn Ausnehmungen vorgesehen. Besonders vorteilhaft ist eine sägezahnartige Ausbildung. Bei einer sägezahnartigen Dichtmanschette ist bevorzugt die der Endkante des Einsteckteils zugekehrte Flanke konisch zulaufend ausgebildet. Vorteilhaft wirkt sich dies beim Einpressen des Einsteckteils in die Bohrung aus, da ein Umklappen der einzelnen Dichtungsprofile zumindest teilweise vermieden wird.

Erfindungsgemäß ist die Halterippe gebildet aus erhärteten Materialiennämlich einem Reaktivharz. Die Halterippe wird vorzugsweise derart hergestellt, dass vor Einschieben des Einsteckteils in die Bohrung des Hauptrohres die Dichtmanschette auf ihrer der Bohrung des Hauptrohres zugewandten Seite mit einem erhärteten Material versehen und anschließend in die Bohrung des Hauptrohres eingeführt wird. Das erhärtete Material härtet vollständig vorzugsweise zwischen zwei und acht Stunden aus. Hierdurch werden Halterippen gebildet, welche die Ausnehmungen der Dichtmanschette vollständig ausformen, d. h. passgenau an dieser angeformt sind. Dadurch wird eine hohe Dicht- und Haltewirkung erzielt. Das Reaktivharz ist vorzugsweise 1-komponentig und/oder feuchtigkeitshärtend. Das Reaktivharz ist dabei bevorzugt ausgewählt aus einer Gruppe umfassend Polyurethane, Ethylenpropile, Methacrylsilane, Polyethylene, und/oder Polyacryle. Das Reaktivharz selbst kann auch mehr-komponentig und dabei bevorzugt 2-komponentig ausgebildet sein. Bei einem 2-komponentigen Reaktivharz werden die beiden Komponenten unmittelbar vor Auftragung derselben auf die Dichtmanschette vermischt. Besonders bevorzugt ist als

Reaktivharz ein solches aus der Gruppe der linearen Polyurethane ausgewählt. Vorteilhafterweise umfasst das erhärtbare Material Füllstoffe und Lösemittel. Das erhärtbare Material kann dabei insbesondere auf Wasser basierend sein, wobei dieses dann in Form einer Emulsion oder Disper-sion vorliegt. Besonders vorteilhaft bei der Verwendung von 1-komponentigen Polyurethanen mit Füllstoffen und Lösemitteln ist, daß diese gleichzeitig als Gleitmittel bei Einschieben des Einsteckteils des Anschlußelements in die Bohrung des Hauptrohrs dienen. Die Reaktivharze können als Copolymere, Block Copolymere. Random Block Copolymere und/oder Pfropfpolymere vorliegen.

Erhärtend im Sinne der vorliegenden Erfindung sind flüssige bis pastöse Materialien, welche physikalisch trocknend, chemisch physikalisch abbindend bzw. durch chemische Reaktionen erhärtend ausgebildet sind. Die erhärtbaren Materialien können im unausgehärteten Zustand die Funktion eines Gleitmittels für die Montage des Anschlußelements übernehmen und im erhärteten Zustand einen festen Verbund mit dem Beton des Hauptrohres eingehen.

Vor Einschieben des Einsteckteils des Anschlusselements in die Bohrung des Hauptrohrs wird die Bohrlochwandung vorteilhafterweise mit Wasser befeuchtet, um eine möglichst gute Bindung des verwendeten erhärtbaren Materials mit der Bohrwand zu erreichen.

Diese und weitere Vorteile der vorliegenden Erfindung werden anhand der folgenden schematischen Zeichnungen näher erläutert. Es zeigen:
- Fig. 1: eine perspektivische Ansicht eines Hauptrohrs mit einem in einer Bohrung eingesteckten Anschlusselement, welches das Hauptrohr mit einem Zulei- tungsrohr verbindet;
- Fig. 2: eine Ausführungsform des erfindungsgemäßen Systems;
- Fig. 3: einen Detailausschnitt der Fig. 2.

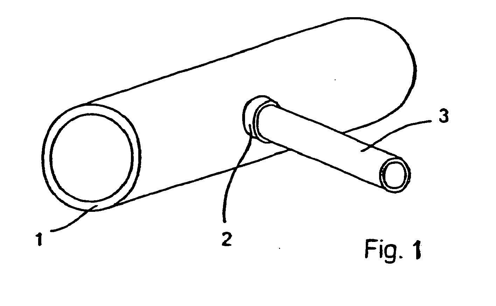

In Fig. 1 ist in einer perspektivischen Ansicht ein Hauptrohr 1 dargestellt, mit dem über ein Anschlußelement 2 ein Zuleitungsrohr 3 verbunden ist.

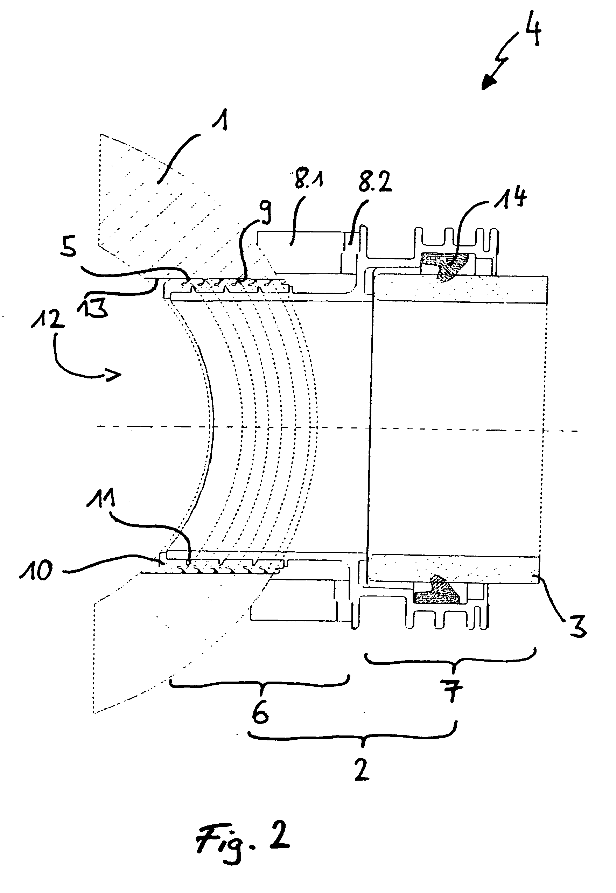

Fig. 2 zeigt ein insgesamt mit dem Bezugszeichen 4 bezeichnetes, erfindungsgemäßes System in Form eines Schnittes durch das Anschlußelement 2, bestehend aus dem Einsteckteil 6 und dem Muffenteil 7, einschließlich des im Ausschnitt gezeigten Hauptrohrs 1 und des Zuleitungsrohrs 3.

Das Einsteckteil 6 weist auf seiner Umfangsfläche im wesentlichen parallel zueinander ausgerichtete, umlaufende Haltestege 11 auf, welche die Dichtmanschette fixieren. Die Haltestege sind dabei bevorzugt sägezahnartig ausgebildet. Die Sicherung der Dichtmanschette 10 durch die Haltestege 11 verhindert beim Einpressen des Einsteckteils 2 in die Bohrung 12 ein Verschieben der Dichtmanschette 10 auf dem Einsteckteil 6 und somit eine Überdehnung des Dichtungsmaterials. Hierdurch bleibt eine flüssigkeitsdichte Verbindung des Einsteckteils 6 mit dem Hauptrohr 1 gewährleistet. Das Einsteckteil 6 weist weiterhin mindestens einen aufschiebbaren Abstandring 8.1 und/oder 8.2 auf. Durch das Vorsehen der Abstandringe 8.1 und 8.2 kann vermieden werden, daß das Einsteckteil 6 in den Innenraum von Hauptrohren 1 eindringt. Der Abstandring 8.1 ist dabei als Formring ausgebildet, dessen eine stirnseitige Anlagefläche in ihrer Kontur an die Krümmung der Außenfläche des Hauptrohrs 1 angepaßt ist. Als Material für die Abstand- und Formringe 8.1, 8.2 kann vorzugsweise Polypropylen oder Polyethylen verwendet werden.

Das Muffenteil 7 des Anschlußelements 2 weist einen Dichtungsring 14 auf, welcher vorzugsweise als Gleitdichtung ausgebildet ist. Die der freien Endkante des Muffenteils 7 zugekehrte Flanke des Dichtungsrings 14 ist dabei konisch zulaufend ausgebildet, wodurch ein leichtes Einstecken des Zuleitungsrohrs 3 und eine definierte Verformung des Dichtungsrings 14 bewirkt und eine einwandfreie Dichtwirkung gewährleistet wird. Im übrigen ist das Anschlußelement 2 vorzugsweise ausgebildet gemäß der EP 0 786 618 B1, deren Offenbarung hiermit vollständig zum Gegenstand des vorliegenden Schutzrechts gemacht wird.

Auf der der Dichtmanschette 10 zugewandten Seite 13 der Bohrung 12 des Hauptrohrs 1 sind insgesamt sechs umlaufende Halterippen 5 ausgebildet, welche paßgenau den nach Einschieben des Einsteckteils 6 in die Bohrung 12 verbliebenen Ausnehmungen 9 der Dichtmanschette 10 angeformt sind. Bei Stutzen für größere Rohrwanddicken sind vorvorteilhaft bis zu 12 Halterippen 5 vorgesehen. Durch die Halterippen 5 ist eine hohe Dichtwirkung auch bei starken Belastungen und ein sicherer Halt des Anschlusselements 2 im Hauptrohr 1 sichergestellt.

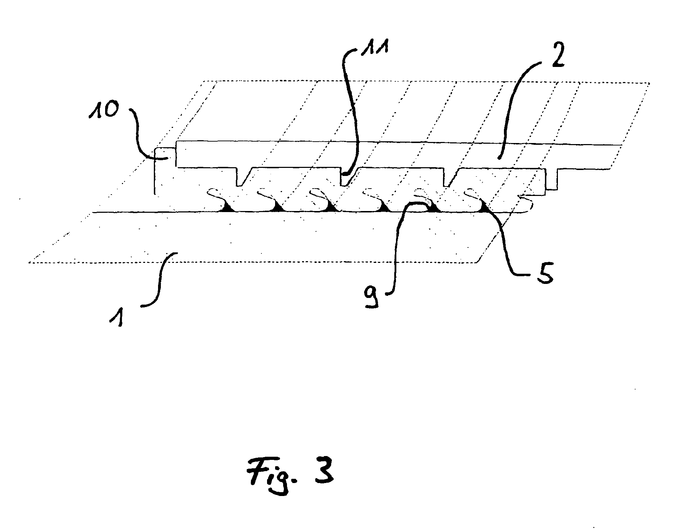

Fig. 3 zeigt eine Detailansicht der Fig. 2, durch welche die passgenaue Anformung der Halterippen 5 an die Ausnehmungen 9 der Dichtmanschette 10 nach Einschieben des Einsteckteils 6 des Anschlusselements 2 in die Bohrung 12 des Hauptrohrs 1 verdeutlicht ist.

Das erfindungsgemäße System wird dergestalt montiert, daß der auf dem Außenumfang des Einsteckteils 6 angeordnete Dichtungsring 10 mit einem erhärtbaren Material, bevorzugt einem 1-komponentigen, Lösemittel und Füllstoff enthaltenden Polyurethan versehen wird. Dieses wird in die vorteilhafterweise sägezahnartig ausgebildeten Ausnehmungen 9 der Dichtmanschette 10 aufgetragen. Als härtbares Material kommt beispielsweise das Fabrikat DENSONOX, Denso GmbH, Leverkusen, Deutschland, in Frage. Vor Einschieben des Einsteckteils 6 samt Dichtmanschette 10 und erhärtbaren Materialien in die Bohrung 12 des Hauptrohrs 1 wird die Bohrwandung mit Wasser befeuchtet. Dabei darf die Oberfläche jedoch nicht nass und/oder eisig sein. Anschließend wird das Einsteckteil 6 in die Bohrung 12 eingeführt, und für etwa fünf Stunden bei einer Temperatur vorzugsweise in einem Bereich von 5 bis 40°C erhärten gelassen. Das Anschlusselement 2 sitzt dann dichtend und sicher in der Bohrung 12 des Hauptrohrs 1.

## Patentansprüche

1. System (4) zum Anschluss eines Zuleitungsrohres (3) an ein einen größeren Durchmesser aufweisendes Hauptrohr (1), umfassend ein Anschlusselement (2), umfassend ein in eine Bohrung (12) eines Hauptrohres (1) einzuführendes Einsteckteil (6) mit einer auf seinem Außenumfang angeordneten Dichtmanschette (10), wobei diese auf ihrer dem Hauptrohr (1) zugewandten Außenfläche im Längsschnitt mindestens eine Ausnehmung (9) aufweist, weiterhin umfassend auf der der Dichtmanschette (10) zugewandten Seite (13) der Bohrung (12) des Hauptrohres (1) mindestens eine Halterippe (5), welche in die Ausnehmung (9) eingreift, wobei die Halterippe aus einem Reaktivharz gebildet ist,
**dadurch gekennzeichnet, dass**
das Reaktivharz Füllstoffe und Lösemittel umfasst.

2. System gemäß Anspruch 12, **dadurch gekennzeichnet, dass** die Halterippe (5) an die Ausnehmung (9) der Dichtmanschette (10) angeformt ist.

3. System gemäß einem der vorhergehenden Ansprüche, **dadurch gekennzeichnet, dass** die Ausnehmung (9) der Dichtmanschette (10) im Längsschnitt sägezahnartig ausgebildet ist.

4. System gemäß einem der vorhergehenden Ansprüche, **dadurch gekennzeichnet, dass** die Halterippe (5) in der Bohrung (12) des Hauptrohrs (1) umlaufend ausgebildet ist.

5. System gemäß einem der vorhergehenden Ansprüche, **dadurch gekennzeichnet, dass** das Reaktivharz 1-komponentig ist.

6. System gemäß einem dervorhergehenden Ansprüche, **dadurch gekennzeichnet, dass** das Reaktivharz feuchtigkeitshärtend ist.

7. System gemäß einem der vorhergehenden Ansprüche , **dadurch gekennzeichnet, dass** das Reaktivharz ausgewählt ist aus einer Gruppe umfassend Polyurethane, Methacrylsilane, Polyethylene, Ethylenpropylene und/oder Polyacryle.

8. System gemäß Anspruch 7, **dadurch gekennzeichnet, dass** das Polyurethan ausgewählt ist aus einer Gruppe umfassend lineare Polyurethane.

## Claims

1. System (4) for connecting a supply pipe (3) to a main pipe (1) having a larger diameter, comprising a connector element (2) comprising a fitting part (6) to be inserted in a bore (12) of a main pipe (1) with a sealing collar (10) disposed on its external circumference, the latter having at least one recess (9) on its external surface facing the main pipe (1) in longitudinal section, further comprising at least one retaining rib (5) on the side (13) of the bore (12) of the main pipe (1) facing the sealing collar (10) which locates in the recess (9), and the retaining rib is made from a reactive resin,
**characterised in that**
the reactive resin contains fillers and solvents.

2. System as claimed in claim 1, **characterised in that** the retaining rib (5) conforms to the recess (9) of the sealing collar (10).

3. System as claimed in one of the preceding claims, **characterised in that** the recess (9) of the sealing collar (10) is of a sawtooth design in longitudinal section.

4. System as claimed in one of the preceding claims, **characterised in that** the retaining rib (5) is disposed extending circumferentially in the bore (12) of the main pipe (1).

5. System as claimed in one of the preceding claims, **characterised in that** the reactive resin comprises 1 component.

6. System as claimed in one of the preceding claims, **characterised in that** the reactive resin hardens in the presence of moisture.

7. System as claimed in one of the preceding claims, **characterised in that** the reactive resin is selected from a group comprising polyurethane, methacryl silane, polyethylene, ethylene propylene and/or polyacrylate.

8. System as claimed in claim 7, **characterised in that** the polyurethane is selected from a group comprising linear polyurethanes.

## Revendications

1. Système (4) pour raccorder un tuyau d'alimentation (3) à un tuyau principal (1) présentant un plus grand diamètre, comprenant un élément de raccordement (2) comprenant un embout (6) à introduire dans un perçage (12) d'un tuyau principal (1) et pourvu d'un manchon d'étanchéité (10) disposé sur sa circonférence extérieure, étant précisé que ledit manchon d'étanchéité (10) présente sur sa surface extérieure tournée vers le tuyau principal (1), en coupe longitudinale, au moins un creux (9), et comprenant par ailleurs sur le côté (13) du perçage (12) du tuyau principal (1) tourné vers le manchon d'étanchéité (10), au moins une nervure de retenue (5) qui pénètre dans le creux (9), la nervure de retenue étant formée à partir d'une résine réactive,
**caractérisé en ce que** la résine réactive comprend de matières de charge et des solvants.

2. Système selon la revendication 1, **caractérisé en ce que** la nervure de retenue (5) est rapportée sur le creux (9) du manchon d'étanchéité (10).

3. Système selon l'une des revendications précédentes, **caractérisé en ce que** le creux (9) du manchon d'étanchéité (10) a une forme en dents de scie, en coupe longitudinale.

4. Système selon l'une des revendications précédentes, **caractérisé en ce que** la nervure de retenue (5) est formée sur tout le tour dans le perçage (12) du tuyau principal (1).

5. Système selon l'une des revendications précédentes, **caractérisé en ce que** la résine réactive est monocomposant.

6. Système selon l'une des revendications précédentes, **caractérisé en ce que** la résine réactive durcit à l'humidité.

7. Système selon l'une des revendications précédentes, **caractérisé en ce que** la résine réactive est choisie dans un groupe comprenant les polyuréthannes, les méthacrylsilanes, les polyéthylènes, les éthylènes propylènes et/ou les acryliques.

8. Système selon la revendication 7, **caractérisé en ce que** le polyuréthanne est choisi dans un groupe comprenant les polyuréthannes linéaires.
